# EUROPÄISCHE PATENTSCHRIFT

(11) **EP 0 559 665 B1**
(45) Veröffentlichungstag und Bekanntmachung des Hinweises auf die Patenterteilung: **23.08.1995**
(21) Anmeldenummer: 91919414.2
(22) Anmeldetag: 13.11.1991
(51) Int. Cl.: H02K 1/14

(54) **STATOR FÜR EINE ELEKTRISCHE MASCHINE**
STATOR FOR AN ELECTRIC MOTOR
STATOR POUR UNE MACHINE ELECTRIQUE

(30) Priorität: 29.11.1990 DE 4037953
(43) Veröffentlichungstag der Anmeldung: 15.09.1993
(73) Patentinhaber: ROBERT BOSCH GMBH, 70442 Stuttgart (DE)
(72) Erfinder: KÖBER, Karl-Ernst, D-7447 Grötzingen (DE); RADKE, Siegmund, D-7022 Leinfelden-Echterdingen 2 (DE); FAY, Hans, D-7317 Wendlingen (DE)
(86) Internationale Anmeldenummer: DE9100880
(87) Internationale Veröffentlichungsnummer: WO9210020

(56) Entgegenhaltungen:
- EP-A- 0 154 469
- DE-C- 149 506
- DE-C- 875 227
- US-A- 3 502 922
- US-A- 3 826 941

## Beschreibung

### Stand der Technik

Die Erfindung geht aus von einem Stator für eine elektrische Maschine, insbesondere einen elektrischen Kleinmotor, der im Oberbegriff des Anspruchs 1 definierten Gattung.

Bei einem bekannten Stator dieser Art für einen zweipoligen Kleinmotor sind die beiden Blechpaketteile symmetrisch ausgebildet und tragen je einen Magnetpol. Von jedem Magnetpol gehen zwei den magnetischen Rückschluß bildende Schenkel ab, die in der Symmetrieebene des Stators über wechselseitige V-Zentrierungen aneinanderstoßen. Nach Aufbringen der in zwei Erregerspulen unterteilten Statorwicklung auf jeweils einen der Magnetpole, werden die beiden Blechpaketteile in den V-Zentrierungen aneinandergefügt und längs der Verbindungsstelle in der Symmetrieebene verschweißt. Der Schweißvorgang stellt einerseits einen bedeutenden Kostenfaktor bei der Herstellung des Stators dar und hat andererseits den Nachteil, daß die Schweißverbindung eine Brücke unter den einzelnen gegeneinander isolierten Blechlamellen bildet, was zu Magnetflußverlust und damit Leistungsverlust führt.

Gemäß US-A-3 826 941 ist ein Starter für einen elektrischen Kleinmotor mit einem Ständerblechpaket bekannt, das zum Aufbringen einer Statorwicklung aus mindestens zwei Blechpaketteilen zusammengesetzt ist, die über deckungsgleiche Formschlußzentrierungen an drei Stellen ineinandergreifen.

Die ineinandergreifenden Teile sind mit hoher Genauigkeit hergestellt, damit die Ständerblechpaketteile ohne Lageungenauigkeit zueinander positioniert sind und damit die Überrastverbindungen einander sicher festhalten.
Die Formschlußzentrierung hat eine für Kleinmotoren ausreichende Festigkeit. Für die bei größeren Maschinen wirksamen Kräfte reicht diese Verbindung nicht aus. Hier besteht die Gefahr, daß sich die Verbindung löst. Diese müßte durch zusätzliche Schweißverbindungen oder dergl. gesichert werden.

Aus der EP 0 154 469 ist ein weiterer Stator für einen Elektromotor bekannt, dessen zwei Ständerblechpakete formschlüssig ineinandergreifend zentriert sind. Hier bewirken die deckungsgleichen Zentriermittel allein keine sichere Halteverbindung. Eine zusätzliche Schweißung oder dergl. der Ständerblechpaketteile ist notwendig mit entsprechend hohem wirtschaftlichem Aufwand.

Aus der DE-C 149 506 sind ein Polkörper und ein hufeisenförmiger Jochkörper so ineinander gefügt, daß sie sich infolge natürlicher Elastizität des Materials federnd aneinander festhalten, wobei die Zentriermittel an der Verbindung keine Überrastverbindung bilden. Auch hier sind zusätzliche Schweißungen oder Verklebungen zwischen den Teilen aus Joch- und Polkörper notwendig.

Bei allen bekannten Lösungen sind, zumindest für andere als Kleinmotoren, zusätzlich zu den mit hohem Genauigkeitsaufwand hergetellten Zentrier- oder Haltemitteln an den Ständerblechpaketen weitere Befestigungsmaßnahmen notwendig, aufgrund deren sich die Herstellung der Elektromotoren wei ter verteuert.

### Vorteile der Erfindung

Der erfindungsgemäße Stator hat den Vorteil einer kostengünstigen Herstellung ohne Einhergehen sonstiger Nachteile. Die Rastverbindung erfolgt über die einzelnen Blechlamellen und ist stanztechnisch einfach realisierbar. Für die Verbindung der beiden Blechpaketteile sind keinerlei Zusatzteile oder -werkstoffe erforderlich.

Die Montage des Stators erfolgt durch Aufbringen einer in Fügerichtung von Steckzungen und Steckbuchsen gerichteten Kraft auf die beiden Blechpaketteile, die zuvor an der Verbindungsstelle aneinandergesetzt worden sind. Während des Fügungsvorganges wird mindestens einer der beiden die Steckbuchse umschließenden Schenkel der Blechlamellen durch das über die Steckzunge seitlich vorstehende Rastprofil nach außen gedrängt und federt nach Hintergreifen des an diesem Schenkel ausgebildeten zweiten Rastprofils in der Steckbuchse durch das erste Rastprofil an der Steckzunge wieder in seine ursprüngliche Lage zurück. Die Verrastung ist damit erfolgt, und die beiden Blechpaketteile sind untrennbar miteinander verbunden. Die Rastverbindung ist nur werkstückzerstörend in der ursprünglichen Fügerichtung wieder lösbar.

Durch die in den weiteren Ansprüchen aufgeführten Maßnahmen sind vorteilhafte Weiterbildungen und Verbesserungen des im Anspruch 1 angegebenen Stators möglich.

Gemäß einer bevorzugten Ausführungsform der Erfindung sind die Rastprofile so ausgebildet, daß die Hintergreifung des zweiten Rastprofils in der Steckbuchse durch das erste Rastprofil an der Steckzunge mit Vorspannung erfolgt. Auf diese Weise liegen die beiden, jeweils einem Blechpaketteil angehörenden Blechlamellen kraftschlüssig aneinander, was für die Stabilität des Stators von Vorteil ist.

Je nach Ausführung des Stators (symmetrisch mit zwei dünnen Schenkeln oder asymmetrisch mit nur einem dickeren Schenkel zwischen den Magnetpolen) sind eine Rastverbindung in jedem Schenkel oder zwei nebeneinanderliegende Rastverbindungen in dem einzigen Schenkel vorgesehen. Die Rastverbindungen sind dabei wechselseitig ausgeführt, d.h. jede Blechlamelle weist eine Steckbuchse und eine Steckzunge auf, die jeweils mit der Steckzunge bzw. der Steckbuchse der Blechlamelle im anderen Blechpaketteil korrespondiert.

Ist die Statorwicklung als eine auf dem einzigen Schenkel sitzende Spule oder als zwei jeweils auf einem der beiden Schenkel sitzende Spulen ausgebildet, so werden gemäß einer bevorzugten Ausführungsform der Erfindung die Rastverbindungen in dem Schenkel oder in den Schenkeln so angeordnet, daß sie innerhalb des von der Spule bzw. den Spulen umschlossenen Schenkelbereichs liegen, und dabei z.B.in dessen Mitte oder ausmittig. Bei dieser Ausbildung übernehmen die mit ihren Spulenträgern die Schenkel umschließenden Spulen die Sicherung der beiden Blechpakethälften gegen axiale Relativverschiebung längs der Trennebene in den Rastverbindungen.

Ist die Statorwicklung von mehreren Spulen gebildet, die jeweils auf einem Magnetpol des Stators aufgewickelt sind, so werden einige der Steckbuchsen mit eingesteckten Steckzungen der in Achsrichtung aneinanderliegenden Blechlamellen quer zu der Richtung der Aneinanderreihung der Blechlamellen und der Fügerichtung von Steckbuchsen und Steckzungen bleibend verformt, und zwar derart, daß die Umrißlinien der verformten Steckbuchsen über die Umrißlinien der unverformten Steckbuchsen zumindest geringfügig überstehen. Damit wird ebenfalls verhindert, daß die beiden aneinandergefügten Blechpaketteile sich innnerhalb der Rastverbindungen längs ihrer Trennlinie gegeneinander verschieben können.

### Zeichnung

Die Erfindung ist anhand von in der Zeichnung dargestellten Ausführungsbeispielen in der nachfolgenden Beschreibung näher erläutert. Es zeigen:
- Fig. 1: eine Vorderansicht eines Stators mit Statorwicklung für einen zweipoligen Kleinmotor, schematisch dargestellt,
- Fig. 2 und 3: jeweils einen Querschnitt eines Stators mit Statorwicklung für einen zweipoligen Kleinmotor in symmetrischer Ausführung (Fig. 2) bzw. asymmetrischer Ausführung (Fig. 3), jeweils schematisch dargestellt,
- Fig. 4: eine vergrößerte Darstellung des Ausschnitts IV in Fig. 1,
- Fig. 5: die gleiche Darstellung wie in Fig. 4 bei Durchführung eines Einstemmvorgangs,
- Fig. 6: eine gleiche Darstellung wie in Fig. 4 mit einer Rastverbindung gemäß einem weiteren Ausführungsbeispiel.

### Beschreibung der Ausführungsbeispiele

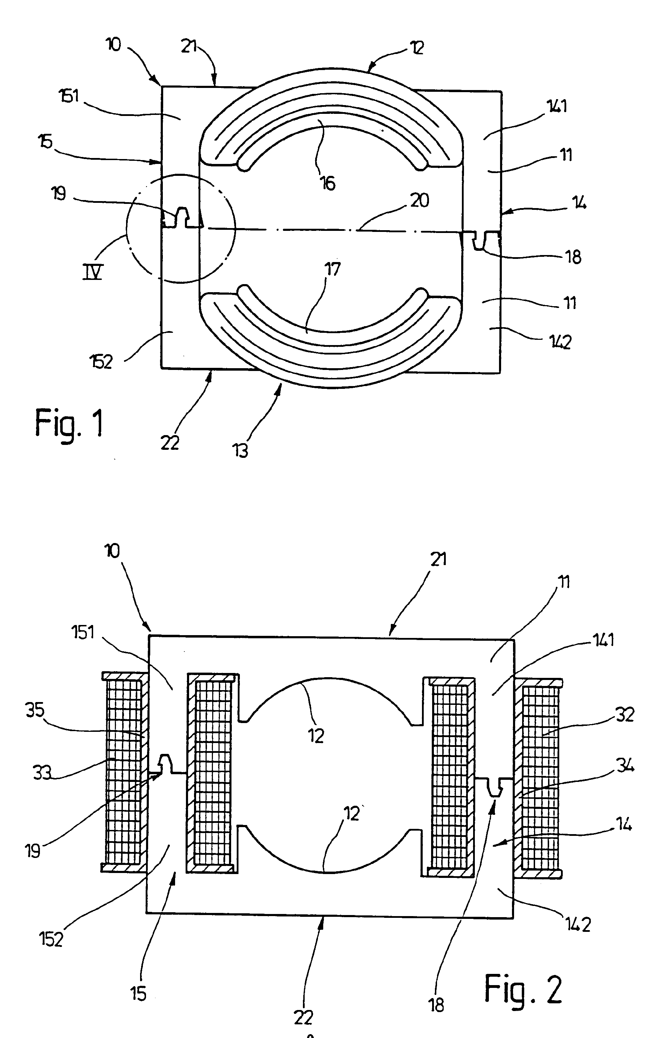

Der in Fig. 1 in Vorderansicht schematisch dargestellte Stator für einen zweipoligen Kleinmotor als Ausführungsbeispiel einer elektrischen Maschine weist ein Ständerblechpaket 10 aus einer Vielzahl von in Achsrichtung isoliert aneinanderliegenden Blechlamellen 11 gleichen Blechschnitts auf. Durch entsprechende Gestaltung des Blechschnitts sind zwei einander diametral gegenüberliegende Magnetpole 12,13 ausgebildet, die über zwei den magnetischen Rückschluß bildende Schenkel 14,15 miteinander verbunden sind. Die Statorwicklung besteht aus zwei Spulenwicklungen 16,17, die jeweils auf einem der beiden Magnetpole 12,13 aufgewickelt sind.

Zur Aufbringung der Spulenwicklungen 16,17 ist der Stator längsgeteilt, so daß zwei symmetrisch ausgebildete Blechpaketteile 21,22 vorhanden sind, deren Trennebene 20 durch die Mitte der beiden Schenkel 14,15 verläuft und diese in jeweils zwei Schenkelhälften 141,142 bzw. 151,152 unterteilt. Längs dieser Trennebene 20 sind die beiden Blechpaketteile 21,22 durch zwei Rastverbindungen 18,19 zusammengefügt, die gleichzeitig eine Zentrierung der Beiden Blechpaketteile 21,22 durch Formschluß herbeiführen. Die Rastverbindungen 18,19 bestehen dabei aus einer Vielzahl von Einzelrastungen, die jeweils an den Blechlamellen 11 ausgebildet sind, so daß jeweils die beiden innerhalb des Blechpakets 10 längs der Trennebene 20 aneinanderstoßenden Blechlamellen 11 in den beiden Blechpaketteilen 21,22 miteinander verrastet sind.

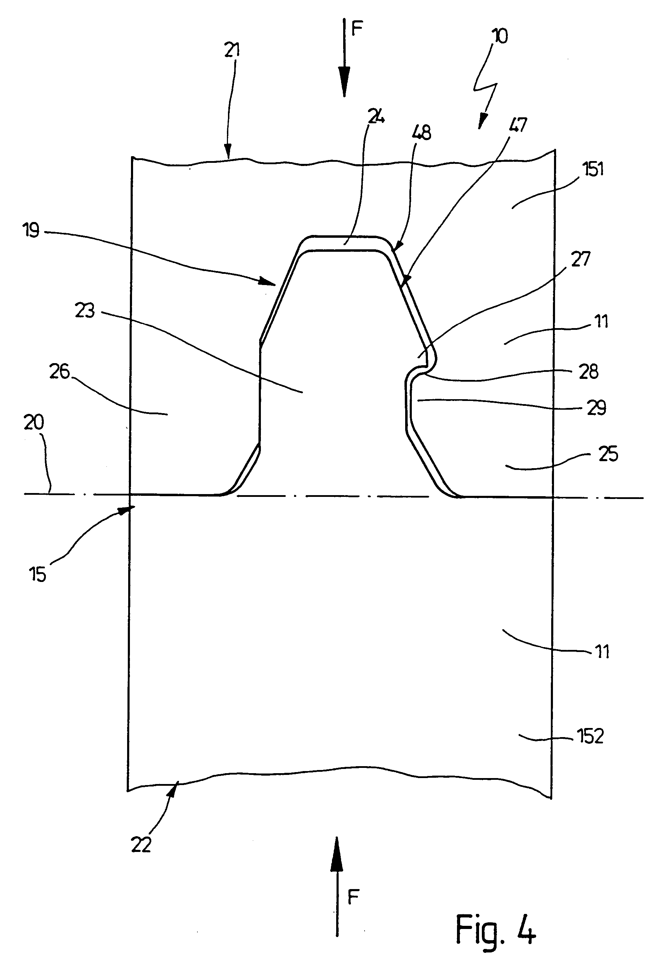

In Fig. 4 ist die Rastverbindung 19 im Schenkel 15 des Blechpakets 10 vergrößert dargestellt. An jeder dem Blechpaketteil 22 zugehörigen Blechlamelle 11 ist eine in Steckrichtung von der Blechlamelle 11 vorstehende Steckzunge 23 ausgebildet, die ein erstes Rastprofil 47 trägt. In jeder zu dem Blechpaketteil 21 zugehörigen Blechlamelle 11 ist eine Steckbuchse 24 ausgenommen, die ein mit dem ersten Rastprofil 47 korrespondierendes zweites Rastprofil 48 trägt, das von dem ersten Rastprofil 47 quer zur Steckrichtung hintergriffen wird. Die beiden Rastprofile 47,48 können dabei so ausgebildet sein, daß die Hintergreifung mit Vorspannung erfolgt, so daß die beiden Blechlamellen 11 längs der Trennebene 20 kraftschlüssig aneinanderliegen. Durch das Ausstanzen der Steckbuchse 24 aus der Blechlamelle 11 erhält diese in diesem Bereich zwei endseitige Schenkel 25,26, die eine gewisse Elastizität besitzen, so daß sie beim Einschieben der Steckzunge 23 in die Steckbuchse 24 seitlich ausweichen können, um danach wieder in ihre Ursprungsstellung zurückzufedern.

Bei dem Ausführungsbeispiel der Rastverbindung 19 gemäß Fig. 4 weist das erste Rastprofil 47 an der Steckzunge 23 eine quer zur Steckrichtung über die Steckzunge 23 vorstehende Rastnase 27 und das zweite Rastprofil 48 an den Steckbuchsen 24 eine damit korrespondierende Rastschulter 28 auf, die an einem in die Steckbuchse 24 hineinragenden Vorsprung 29 des Schenkels 25 ausgebildet ist.

Die Rastverbindung 18 im Schenkel 14 ist identisch ausgebildet wie die Rastverbindung 19 und ist lediglich um 180° gedreht angeordnet, was bedeutet, daß im Bereich des Schenkels 14 die zu dem Blechpaketteil 21 gehörigen Lamellen 11 zusätzlich noch eine Steckzunge, identisch der Steckzunge 23, und die dem Blechpaket 22 zugehörigen Blechlamellen 11 zusätzlich eine Steckbuchse, identisch der Steckbuchse 24, aufweisen. Jede Blechlamelle 11 ist also mit einer Steckzunge 23 und einer Steckbuchse 24 versehen die jeweils in einem der beiden Schenkelabschnitte der Blechlamellen 11 liegen.

Der vorstehend beschriebene Stator gemäß Fig. 1 wird wie folgt montiert: Die in Stanzverfahren mit Steckzungen 23 und Steckbuchsen 24 aus Isolierblech hergestellten Blechlamellen 11 werden zu den beiden Blechpaketteilen 21,22 in bekannter Weise zusammengesetzt. Danach werden die beiden Blechpaketteile 21,22 aneinandergesetzt, und zwar derart, daß die Steckzungen 23 und die Steckbuchsen 24 der einzelnen Blechlamellen 11 in beiden Blechpaketteilen 21,22 einander fluchtend gegenüberstehen. Danach werden auf die beiden Blechpaketteile 21,22 in Steckrichtung aufeinander zugekehrten Druckkräfte F von solcher Größe aufgebracht, daß die Steckzungen 23 aller Blechlamellen 11 unter elastischer Aufweitung der Schenkel 25 in die Steckbuchsen 24 eindringen bis die Rastnasen 27 den Vorsprung 29 passiert haben und die Schenkel 25 zurückfedern, so daß die Rastnasen 27 hinter die Rastschultern 28 greifen. Damit ist die Verrastung der beiden Blechpaketteile 21,22 erfolgt. Ein Auseinanderziehen der beiden Blechpaketteile 21,22 ist nicht mehr möglich.

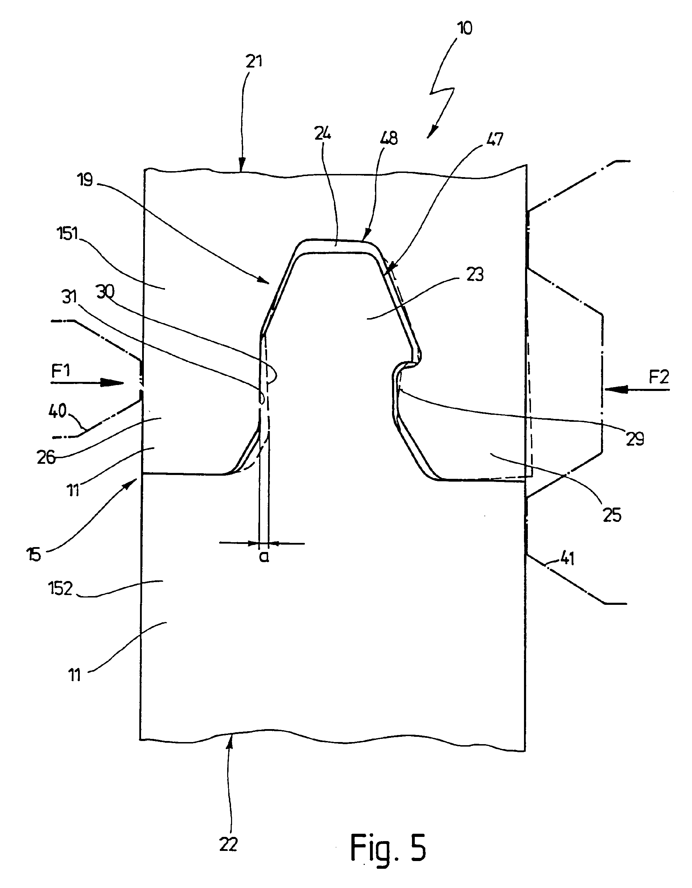

Um die beiden Blechpaketteile 21,22 gegen axiale Relativverschiebung längs der Trennebene 20 zu sichern, erfolgt noch ein seitliches Verstemmen im Bereich der Steckbuchsen 24 in der Schenkelhälfte 151 bzw. 142. Wie in Fig. 5 für die Schenkelhälfte 151 dargestellt ist, wird hierzu ein Stemmwerkzeug 40 seitlich außen an die Schenkelhälfte 151, quer zur Fügeachse der Rastverbindung 19 angelegt. Auf der gegenüberliegenden Schenkelseite des Schenkels 15 wird ein Abstützwerkzeug 41 angesetzt. Nunmehr wird eine Verstemmkraft F1 an dem Stemmwerkzeug 40 aufgebracht, wobei die Gegenhalterung über das Abstützwerkzeug 41 mit der Kraft F2 erfolgt. Bei diesem Vorgang werden einige Schenkel 26 der Blechlamellen 11 nach innen gedrückt, wobei die Steckbuchsen 24 mit eingesteckten Steckzungen 23 quer zur Fügeachse und der axialen Reihung der Blechlamellen 11 bleibend verformt werden, und zwar derart, daß die Umrißlinien 30 der verformten Steckbuchsen 24 um ein Überstandsmaß a über die Umrißlinien 31 der nicht verformten Steckbuchsen 24 in benachbarten Blechlamellen 11 überstehen. Dieser Vorgang des Verstemmens wird an verschiedenen Stellen der Schenkelhälfte 151 ausgeführt, die im Axialabstand voneinander liegen. Der gleiche Verstemmvorgang wird an dem Schenkel 14 durchgeführt, wobei das Stemmwerkzeug 40 an die Schenkelhälfte 142 angesetzt wird.

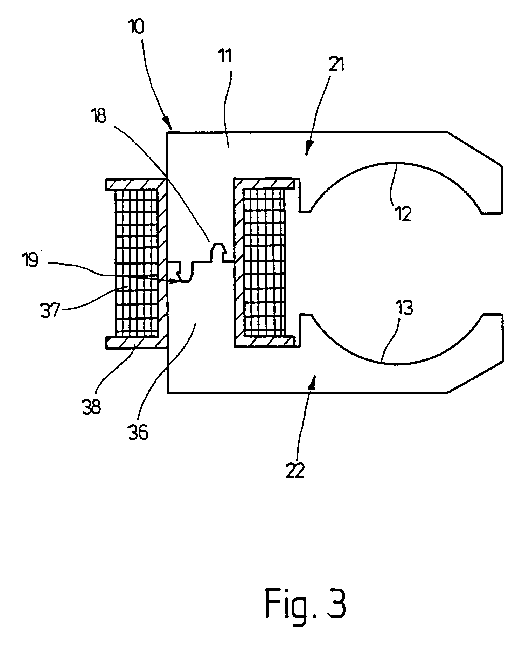

In Fig. 2 ist ein weiteres Ausführungsbeispiel eines Stators für einen zweipoligen Kleinmotor im Querschnitt dargestellt.

Dieser Stator unterscheidet sich von dem zu Fig. 1 beschriebenen Stator dadurch, daß hier die Statorwicklung als Zylinderspulen 32,33 ausgeführt ist, die auf einem Spulenträger 34,35 mit Hohlkastenprofil aufgewickelt sind und jeweils einen der beiden Schenkel 14,15 umschließen. Zur Montage des Stators werden zunächst die beiden Spulenträger 34,35 mit Zylinderspulen 32,33 auf die beiden Schenkelhälften 142,152 des Blechpaketteils 21 aufgesteckt und dann der zweite Blechpaketteil 22 mit seinen Schenkelhälften 141,151 in die Spulenträger 34,35 eingeschoben. Durch Aufbringen einer quer zur Trennebene 20 gerichteten Druckkraft F (Fig. 4) werden an den einzelnen Blechlamellen 11 die Steckzungen 23 wieder in die Steckbuchsen 24 eingeschoben und damit die beiden Rastverbindungen 18,19 hergestellt. Das Verstemmen der Rastverbindung 18,19 gegen axiale Relativverschiebung der beiden Blechpaketteile 21,22 entfällt hier, da die die Schenkel 14,15 umschließenden Spulenträger 34,35 eine solche Axialverschiebung unterbinden. Im übrigen stimmt der in Fig. 2 dargestellte Stator mit dem in Fig. 1 überein, so daß gleiche Bauteile mit gleichen Bezugszeichen versehen sind.

In Fig. 3 ist ein weiteres Ausführungsbeispiel eines Stators für einen zweipoligen Kleinmotor im Querschnitt schematisch dargestellt, der im Gegensatz zu dem Stator in Fig. 2 asymmetrisch ausgeführt ist. Die Blechschnitte der einzelnen Blechlamellen 11 sind so ausgeführt, daß die beiden Magnetpole 12,13 über einen einzigen, den magnetischen Rückschluß bildenden Schenkel 36 miteinander verbunden sind. Auf diesem Schenkel 36 sitzt die Statorwicklung, die als eine einheitliche Zylinderspule 37 ausgeführt ist. Die Zylinderspule 37 ist auf einen Spulenträger 38 mit Hohlkastenprofil aufgewickelt, der den Schenkel 36 umschließt. Das Blechpaket 10 ist wiederum aus den beiden Blechpaketteilen 21,22 zusammengesetzt, wobei die beiden Blechpaketteile 21,22 in gleicher Weise über die beiden Rastverbindungen 18,19 zusammengehalten werden. Die beiden Rastverbindungen 18,19 sind mittig in dem Schenkel 36 angeordnet und in gleicher Weise, wie vorstehend beschrieben, ausgebildet. Die beiden Rastverbindungen 18,19 liegen dabei mit Abstand nebeneinander, und zwar quer zur Richtung der Aneinanderreihung der Blechlamellen 11 und zur Fügerichtung von Steckzungen und Steckbuchsen. Die Montage dieses Stators gemäß Fig. 3 erfolgt in gleicher Weise wie zu Fig. 2 beschrieben. Auch hier entfällt die Notwendigkeit der Sicherung der beiden Blechpaketteile 21,22 gegen Axialverschiebung, da eine solche durch den den Schenkel 36 umschließenden Spulenträger 38 ausgeschlossen ist.

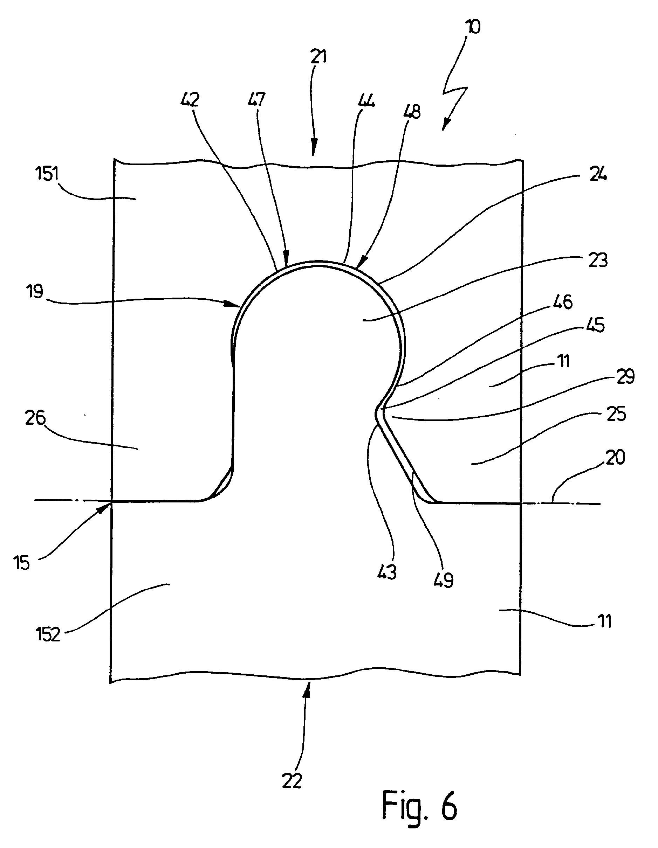

In Fig. 6 ist ein gleicher Ausschnitt eines Stators dargestellt, wie er in Fig. 4 skizziert und beschrieben worden ist. Im Unterschied zu Fig. 4 sind hier die Rastprofile 47,48 von Steckzungen 23 und Steckbuchse 24 modifiziert. Das Rastprofil 47 an der Steckzunge 23 ist als Rundkopf 42 mit einem Halsansatz 43 ausgebildet, dessen Quermaß kleiner ist als der größte Durchmesser des Rundkopfes 42. Das Rastprofil 48 an der Steckbuchse 24 ist als Kreis 44 ausgeführt, der eine quer zur Steckrichtung sich erstreckende Öffnung 45 aufweist, die etwa dem Quermaß des Halsansatzes 43 des Rastprofils an der Steckzunge 23 entspricht. Der Kreisdurchmesser ist geringfügig größer als der Durchmesser des Rundkopfes 42. Beim Ineinanderfügen von Steckzunge 23 und Steckzunge 24 wird durch den Rundkopf 42 und die am Vorsprung 29 des Blechschenkels 25 ausgebildeten Schräge 49 der Blechschenkel 25 nach außen gedrückt bis der Rundkopf 42 in die kreisförmige Steckbuchse 24 eingerastet ist. Der Schenkel 25 federt zurück und legt sich mit einer kreisbogenförmigen Schulter 46 am Vorsprung 29 des Blechschenkels 25 an den Rundkopf 42 bis hin zum Halsansatz 43 an. Damit ist die Rastverbindung 19 hergestellt und kann durch in Fügeachse wirkende Zugkräfte nicht wieder gelöst werden.

## Patentansprüche

1. Stator für eine elektrische Maschine, insbesondere Kleinmotor, mit einem zweiteiligen Ständerblechpaket (21, 22), das zum Aufbringen einer Statorwicklung (16, 17) aus mindestens zwei Blechpaketteilen (21, 22) zusammengesetzt ist, die über Formschlußzentrierungen aneinandergefügt sind, wobei jede Zentrierung als Rastverbindung (18, 19) ausgeführt ist, die aus einer Vielzahl von jeweils an jeder Blechlamelle (11) des einen Blechpaketteiles (21, 22) angeformten, in Steckrichtung von den Blechlamellen (11) vorstehenden Steckzungen (23) mit einem ersten Rastprofil (47) und aus einer Vielzahl von jeweils in jeder Blechlamelle (11) des anderen Blechpaketteils (22) ausgesparten Steckbuchsen (24) mit einem zweiten Rastprofil (48) besteht, das von dem ersten Rastprofil (47) etwa quer zur Steckrichtung hintergriffen ist, dadurch gekenzeichnet, daß einige Steckbuchsen (24) mit eingesteckten Steckzungen (23) der in Achsrichtung aneinanderliegenden Blechlamellen (11) quer zur Steckrichtung und axialen Reihung der Blechlamellen (11) bleibend verformt sind, derart, daß die Umrißlinien (31) der verformten Steckbuchsen (24) über die Umrißlinien (31) der unverformten Steckbuchsen (24) in benachbarten Blechlamellen (11) zumindest geringfügig überstehen.

2. Stator nach Anspruch 1, dadurch gekennzeichnet, daß die Rastprofile (47,48) so ausgebildet sind, daß die gegenseitige Hintergreifung mit Vorspannung erfolgt.

3. Stator nach Anspruch 1 oder 2, dadurch gekennzeichnet, daß das erste Rastprofil (47) an den Steckzungen (23) mindestens eine etwa quer zur Steckrichtung über die Steckzunge (23) vorstehende Rastnase (27) und das zweite Rastprofil (48) an den Steckbuchsen (24) mindestens eine damit korrespondierende Rastschulter (28) aufweist, die an einem in die Steckbuchse (24) hineinragenden Vorsprung (29) der Blechlamelle (11) ausgebildet ist.

4. Stator nach Anspruch 1 oder 2, dadurch gekennzeichnet, daß das erste Rastprofil (47) an den Steckzungen (23) als Rundkopf (42) mit Halsansatz (43) ausgebildet ist, dessen Quermaß kleiner ist als der größte Durchmesser des Rundkopfes (42), und daß das zweite Rastprofil (48) an den Steckbuchsen (24) als Kreis (44) mit einer dem Quermaß des Halsansatzes (43) entsprechenden Öffnung (45) ausgebildet ist, dessen Kreisdurchmesser geringfügig größer ist als der Durchmesser des Rundkopfes (42).

5. Stator nach einem der Ansprüche 1 - 4 mit einem oder zwei den magnetischen Rückschluß bildenden Schenkeln, dadurch gekennzeichnet, daß die Rastverbindungen (18,19) in dem einen Schenkel (36) oder in jedem der beiden Schenkel (14,15) angeordnet sind.

6. Stator nach Anspruch 5, dadurch gekennzeichnet, daß an jeder einem Blechpaketteil (21,22) zugehörigen Blechlamelle (11) eine Steckzunge (23) und eine Steckbuchse (24) ausgebildet sind, die jeweils einer der beiden Rastverbindungen (18,19) angehören, und daß die beiden Rastverbindungen (18,19) entweder in dem einen Schenkel (36) quer zur Blechlamellenreihung nebeneinanderliegen, oder auf zwei Schenkeln (14,15) aufgeteilt sind.

7. Stator nach einem der Ansprüche 1 - 6, dadurch gekennzeichnet, daß die Statorwicklung eine Zylinderspule (37) oder zwei Zylinderspulen (32,33) aufweist, die jeweils einen Schenkel (36;14,15) umschließen, und daß die in den Schenkeln (36;14,15) ausgebildeten Rastverbindungen (18,19) in dem von den Zylinderspulen (37;32,33) umschlossenen Schenkelbereich liegen.

8. Verfahren zur Herstellung des Stators nach einem der Ansprüche 1 bis 7, dadurch gekennzeichnet, daß die durch Stanzen mit Steckzungen (23) und Steckbuchsen (24) hergestellten Blechlamellen (11) zu Blechpaketteilen (21, 22) zusammengesetzt werden, daß nach Aufbringen der Statorwicklung (16, 17; 37; 32, 33) auf die beiden Blechpaketteile (21, 22) diese derart aneinandergesetzt werden, daß Steckzungen (23) und Steckbuchsen (24) einander fluchtend gegenüberstehen, und daß auf die beiden Blechpaketteile (21, 22) in Steckrichtung aufeinander zugekehrte Druckkräfte (F) solcher Größe aufgebracht werden, daß die Steckzungen (23) unter elastischer Aufweitung der Steckbuchsen (24) in letztere einrasten, wobei an dem die Steckbuchsen (24) enthaltenden Blechpaketteil (21) im Bereich der Steckbuchsen (24) seitlich außen ein Stemmwerkzeug (40) angesetzt wird und mit diesem eine quer zur Fügeachse von Steckzungen (23) und Steckbuchsen (24) gerichtete Verformungskraft (F1) auf das Blechpaketteil (21) aufgebracht wird und daß dieser Stemmvorgang an verschiedenen axial versetzten Stellen des Blechpaketteils (21) durchgeführt wird.

## Claims

1. Stator for an electric machine, in particular a small-power motor, having a two-part stator laminate stack (21, 22) which for the purpose of mounting a stator winding (16, 17) is assembled from at least two laminate stack parts (21, 22) which are joined together via self-centring devices, each centring device being designed as a locking joint (18, 19), which locking joint (18, 19) consists of a multiplicity of tabs (23) with a first locking profile (47), which are integrally formed in each case on each lamination (11) of the one laminate stack part (21, 22) and project in the plug-in direction of the laminations (11), and of a multiplicity of receptacles (24) with a second locking profile (48), which are recessed in each case in each lamination (11) of the other laminate stack part (22), which locking profile (48) is gripped from behind by the first locking profile (47) approximately transverse to the plug-in direction, characterised in that some receptacles (24) with plug-in tabs (23) of the laminations (11) bearing against one another in the axial direction are permanently deformed transverse to the plug-in direction and axial sequence of the laminations (11) in such a way that the contours (31) of the deformed receptacles (24) project at least slightly beyond the contours (31) of the non-deformed receptacles (24) in adjacent laminations (11).

2. Stator according to Claim 1, characterised in that the locking profiles (47, 48) are constructed in such a way that the mutual gripping from behind is performed with pretensioning.

3. Stator according to Claim 1 or 2, characterised in that the first locKing profile (47) on the tabs (23) has at least one locking nose (27) projecting approximately transverse to the plug-in direction beyond the tab (23), and the second locking profile (48) on the receptacles (24) has at least one locking shoulder (28) which corresponds to the said locking nose and is constructed on a projection (29) of the lamination (11) which projects into the receptacle (24).

4. Stator according to Claim 1 or 2, characterised in that the first locking profile (47) is constructed on the tabs (23) as a round head (42) with a neck attachment (43) whose transverse dimension is smaller than the largest diameter of the round head (42), and in that the second locking profile (48) on the receptacles (24) is constructed as a circle (44) which has an opening (45) corresponding to the transverse dimension of the neck attachment (43) and whose circular diameter is slightly larger than the diameter of the round head (42).

5. Stator according to one of Claims 1 - 4 having one or two limbs forming the magnetic return path, characterised in that the locking joints (18, 19) are arranged in the one limb (36) or in each of the two limbs (14, 15).

6. Stator according to Claim 5, characterised in that constructed on each lamination (11) associated with a laminate stack part (21, 22) are a tab (23) and a receptacle (24) which in each case belong to one of the two locking joints (18, 19), and in that the two locking joints (18, 19) either are situated next to one another transverse to the lamination sequence in the one limb (36), or are split between two limbs (14, 15).

7. Stator according to one of Claims 1 - 6, characterised in that the stator winding has a cylindrical coil (37) or two cylindrical coils (32, 33) which in each case enclose a limb (36; 14, 15), and in that the locking joints (18, 19) constructed in the limbs (36; 14, 15) are situated in the limb region enclosed by the cylindrical coils (37; 32, 33).

8. Method for producing the stator according to one of Claims 1 - 7, characterised in that the laminations (11) produced with tabs (23) and receptacles (24) by stamping are assembled to form laminate stack parts (21, 22), in that after mounting of the stator winding (16, 17; 37; 32, 33) on the two laminate stack parts (21, 22) the latter are placed against one another in such a way that tabs (23) and receptacles (24) are aligned opposite one another, and in that there are applied to the two laminate stack parts (21, 22) compressive forces (F) which are directed towards one another in the plug-in direction and are of a magnitude such that the tabs (23) engage in the receptacles (24) accompanied by elastic expansion of the latter, a caulking tool (40) being applied laterally on the outside in the region of the receptacles (24) to the laminate stack part (21) containing the receptacles (24), and a deforming force (F1) directed transverse to the joining axis of the tabs (23) and receptacles (24) being applied with said caulking tool to the laminate stack part (21), and in that said caulking operation is carried out at different axially offset points of the laminate stack part (21).

## Revendications

1. Stator pour machine électrique, notamment un petit moteur, comportant un paquet de tôles de stator (21, 22) en deux parties, réunies pour monter un enroulement de stator (16, 17) formé à l'aide d'au moins deux parties (21, 22) du paquet de tôles, ces deux parties étant réunies par l'intermédiaire de moyens de centrage à liaison de forme, chaque moyen de centrage étant réalisé sous la forme d'une liaison à encliquetage (18, 19) composée d'un grand nombre de languettes d'enfichage (23) réalisées sur chaque lamelle de tôle (11) d'une partie (21, 22) du paquet de tôles, et qui s'étendent dans la direction d'enfichage en étant en saillie sur les lamelles de tôle (11) et en ayant un premier profil d'encliquetage (47), ainsi que d'un grand nombre de douilles d'enfichage (24) découpées chaque fois dans la lamelle de tôle (11) de l'autre partie (22) du paquet de tôles en ayant un second profil d'encliquetage (48) derrière lequel s'accroche le premier profil d'encliquetage (47) sensiblement transversalement à la direction d'enfichage, stator caractérisé en ce que certaines douilles d'enfichage (24) dans lesquelles sont engagées les languettes d'enfichage (23) des lamelles de tôle (11), juxtaposées dans la direction axiale, sont déformées de manière permanente transversalement à la direction d'enfichage et à l'alignement axial des lamelles de tôle (11) de façon que les lignes de contour (31) des douilles d'enfichage (24) déformées dépassent au moins légèrement des lignes de contour (31) des douilles d'enfichage (24) non déformées dans les lamelles de tôle (11) voisines.

2. Stator selon la revendication 1, caractérisé en ce que les profils d'encliquetage (47, 48) sont réalisés pour que l'accrochage par derrière se fasse réciproquement avec précontrainte.

3. Stator selon la revendication 1 ou 2, caractérisé en ce que le premier profil d'encliquetage (47) sur les lamelles d'enfichage (23) présente au moins un bec d'encliquetage (27) transversalement en saillie par rapport à la direction d'enfichage, au-delà de la lamelle d'enfichage (23), et le second profil d'encliquetage (48) des douilles d'enfichage (24) comporte au moins un épaulement d'encliquetage (28) correspondant, qui est réalisé sur une partie en saillie (29) de la lamelle en tôle (11) qui pénètre dans la douille d'enfichage (24).

4. Stator selon l'une des revendications 1 ou 2, caractérisé en ce que le premier profil d'encliquetage (47) sur les languettes d'enfichage (23) est en forme de tête ronde (42) avec une base en forme de col (43) dont la mesure de la section est inférieure au plus grand diamètre de la tête ronde (42), et en ce que le second profil d'encliquetage (48) des douilles d'enfichage (24) est un cercle (44) avec une ouverture (45) dont la dimension transversale correspond à celle du col (43), le diamètre du cercle étant légèrement supérieur à celui de la tête ronde (32).

5. Stator selon l'une des revendications 1 à 4 avec une ou deux branches formant le chemin de retour de flux magnétique, caractérisé en ce que les liaisons par encliquetage (18, 19) sont réalisées dans une branche (36) ou dans chacune des deux branches (14, 15).

6. Stator selon la revendication 5, caractérisé en ce que sur chacune des parties (21, 22) du paquet de tôles, les lamelles en tôle (11) correspondantes comportent une lamelle d'enfichage (23) et une douille d'enfichage (24) qui appartiennent respectivement à l'une des deux liaisons d'encliquetage (18, 19) et les deux liaisons d'encliquetage (18, 19) sont soit juxtaposées soit sur une branche (36) transversalement à la juxtaposition des lamelles de tôle, soit réparties entre les deux branches (14, 15).

7. Stator selon l'une des revendications 1 à 6, caractérisé en ce que l'enroulement de stator comporte une bobine cylindrique (37) ou deux bobines cylindriques (32, 33) entourant chaque fois une branche (36; 14, 15), et en ce que les liaisons d'encliquetage (18, 19) réalisées dans les branches (36 ; 14, 15) sont situées dans la zone de la branche entourée par les bobines cylindriques (37 ; 32, 33).

8. Procédé de fabrication du stator selon l'une des revendications 1 à 7, caractérisé en ce qu'on réunit en des parties du paquet de tôles (21, 22), des lamelles de tôle (11) fabriquées par estampage, avec des languettes d'enfichage (23) et des douilles d'enfichage (24), après mise en place de l'enroulement de stator (16, 17; 37; 32, 33) sur les deux parties de paquet de tôles (21, 22), on réunit ces deux parties, les languettes d'enfichage (23) et les douilles d'enfichage (24) étant alignées en regard, et en ce qu'on on applique aux deux parties (21, 22) du paquet de tôles des poussées (F) dirigées l'une vers l'autre dans la direction d'enfichage et dont l'amplitude est telle que les languettes d'enfichage (23) pénètrent dans les douilles d'enfichage (24) en les ouvrant élastiquement, et contre la partie (21) du paquet de tôles correspondant aux douilles d'enfichage (24), au niveau des douilles (24), on met en place latéralement, à l'extérieur, un outil de matage (40) pour exercer une force de déformation (F1) dirigée transversalement à l'axe de jonction des languettes d'enfichage (23) et des douilles d'enfichage (24) sur la partie (21) du paquet de tôles, et on répète cette opération de matage en différents points décalés axialement de la partie (21) du paquet de tôles.
